# EUROPEAN PATENT SPECIFICATION

(11) **EP 3 880 915 B1**
(45) Date of publication and mention of the grant of the patent: **03.04.2024**
(21) Application number: 19805397.7
(22) Date of filing: 07.11.2019
(51) Int. Cl.: E05D 3/02, E05D 7/10, E05D 11/04

(54) **HINGE FOR FIRE DOORS**
SCHARNIER FÜR BRANDSCHUTZTÜREN
CHARNIÈRE POUR PORTES COUPE-FEU

(30) Priority: 16.11.2018 IT 201800010388
(43) Date of publication of application: 22.09.2021
(73) Proprietor: Maggi S.r.l., 23801 Calolziocorte (IT)
(72) Inventor: MAGGI, Mario, 23801 Calolziocorte (LC) (IT); MAGGI, Rosella, 23801 Calolziocorte (LC) (IT)
(74) Representative: Di Gennaro, Sergio
(86) International application number: PCT/IB2019/059571
(87) International publication number: WO 2020/099995

(56) References cited:
- US-A- 698 884
- US-A- 4 097 959
- US-A1- 2016 305 481

## Description

The present invention relates to a hinge for fire doors.

Fire doors are usually mounted on a wall within a frame or jamb inside of which a shutter is usually provided.

The door is usually provided with two or more hinges which comprise a frame side portion and a door side portion, both obtained from thick sheet metal, for example of galvanized steel or another suitable metallic material.

An example of such a door is described in EP0796969 in the name of this same Applicant, in which a device of this type is described. The U-shaped frame side portion comprises a fixing plate extending integrally into a first pair of tubular pieces, provided at the ends of the fixing plate. Between the fixing plate and the tubular pieces, a first folded zone is provided as a connecting square.

The door side portion, also shaped, comprises a fixing plate extending into a second tubular piece. Between the fixing plate and the tubular piece, a second folded zone is provided as a connecting square. The first pair of tubular pieces and the second tubular piece are aligned with each other when said hinge is assembled. The pair of tubular pieces (those integral with the door jamb) inside comprises a first elongated element (such as a cylinder) while, on both the opposite ends of the second tubular piece (the one integral with the shutter), a second elongated element is included, which is also substantially cylindrical. The first and the second element rotate with respect to each other around a same longitudinal axis by means of a rotation mechanism which comprises rolling elements (such as spheres) interposed between annular races obtained one on the first element and one on the second element. Each of said races has a bottom and side or edge portions which are sized so as to prevent the spheres from coming off the hinge during rotation and at the same time prevent contact between the first and second element even when the longitudinal axes of the first and of the second element are inclined with respect to each other.

The Applicant, despite the undoubted reliability of the system, has perceived that in the case of major lateral forces on the door which tend to offset the two longitudinal axes, the spheres may not be sufficient to keep the hinge in axis, sometimes risking that the door comes off its hinges. Moreover, the open space between the first and the second element can be a vehicle for introducing dirt, moisture, water and anything else into the rotation mechanism, compromising the optimal operation thereof.

The Applicant has found a solution to these aforementioned drawbacks by providing a hinge for fire doors having the characteristics of the appended claim 1. US4097959 discloses another example of a hinge.

The characteristics and advantages of the present invention will become more apparent from the following description of an embodiment of the invention, provided by way of non-limiting example, with reference to the schematic attached drawings, wherein:

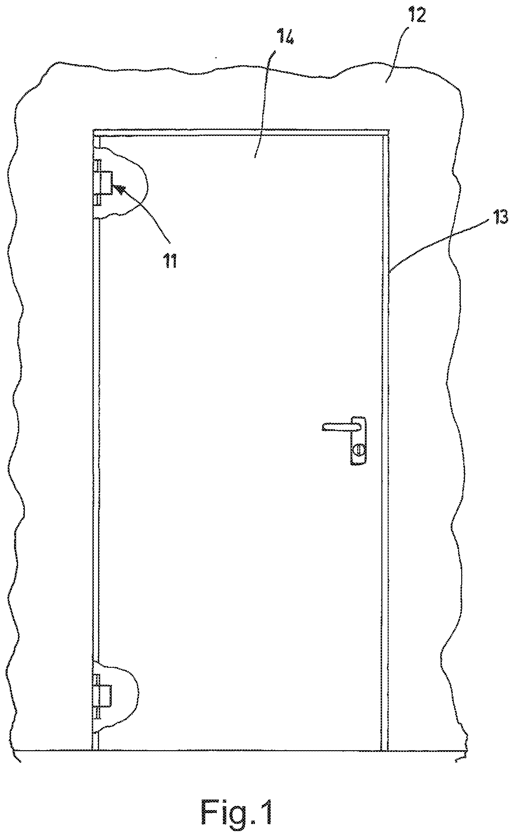

- figure 1 shows a schematic and synthetic view of a fire door provided with at least one hinge according to the present invention;

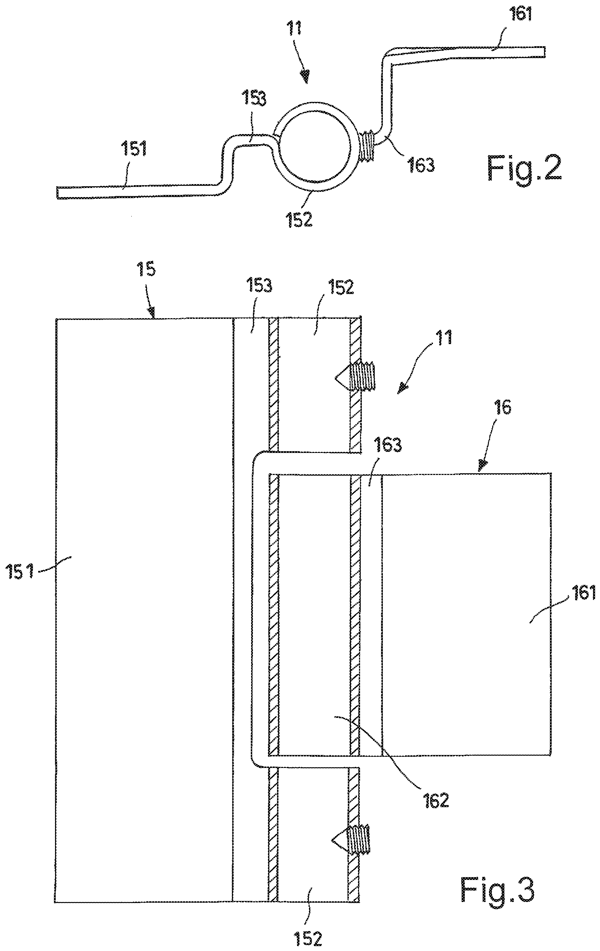

- figure 2 is a top view of a hinge according to the present invention;
- figure 3 is a front view of the hinge as shown in figure 2;

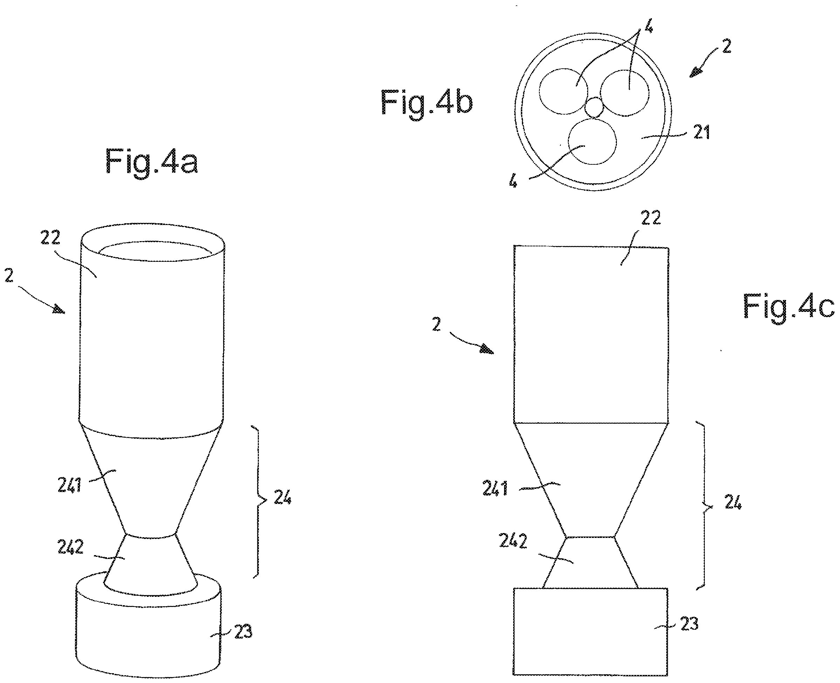

- figure 4a illustrates the first element in a perspective view;
- figure 4b illustrates the first element viewed from above;
- figure 4c illustrates the first element in a side view;

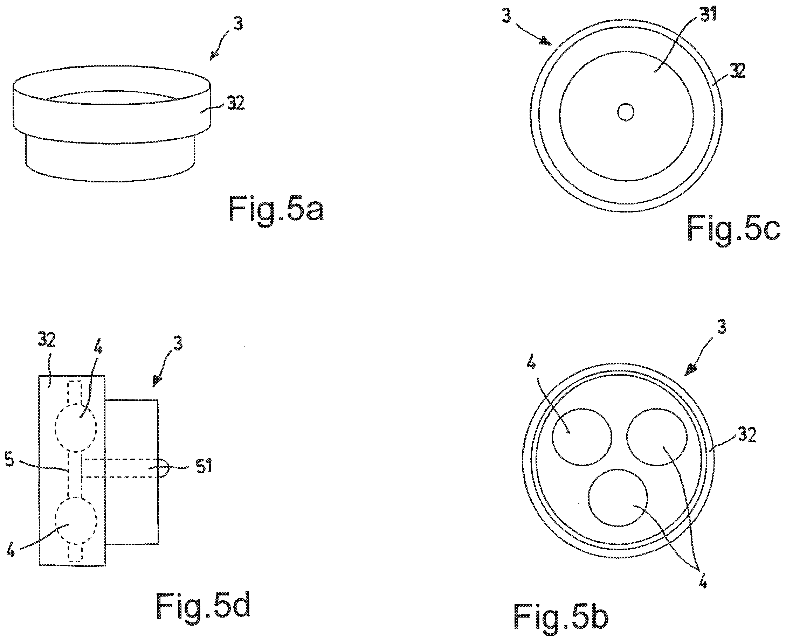

- figure 5a illustrates the second element in a perspective view;
- figure 5b illustrates the second element viewed from above with the rolling elements inside it;
- figure 5c illustrates the second element viewed from above with the rolling elements inside it;
- figure 5d illustrates the second element in a side view;

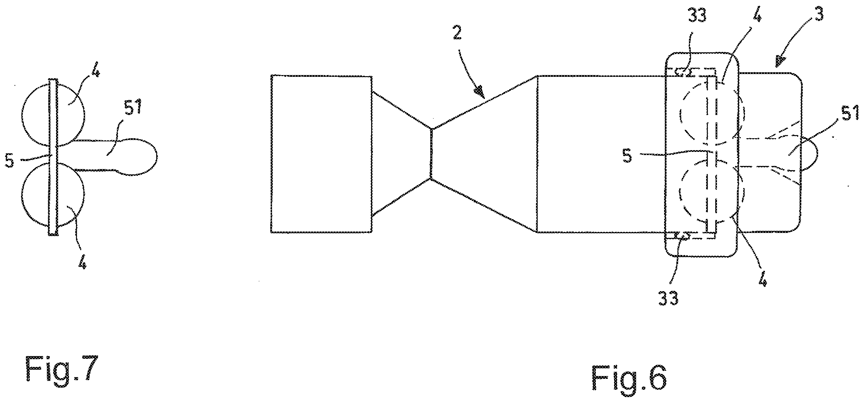

- figure 6 illustrates the first and second elements assembled together;
- figure 7 is a side view of the circular support of the rolling elements;

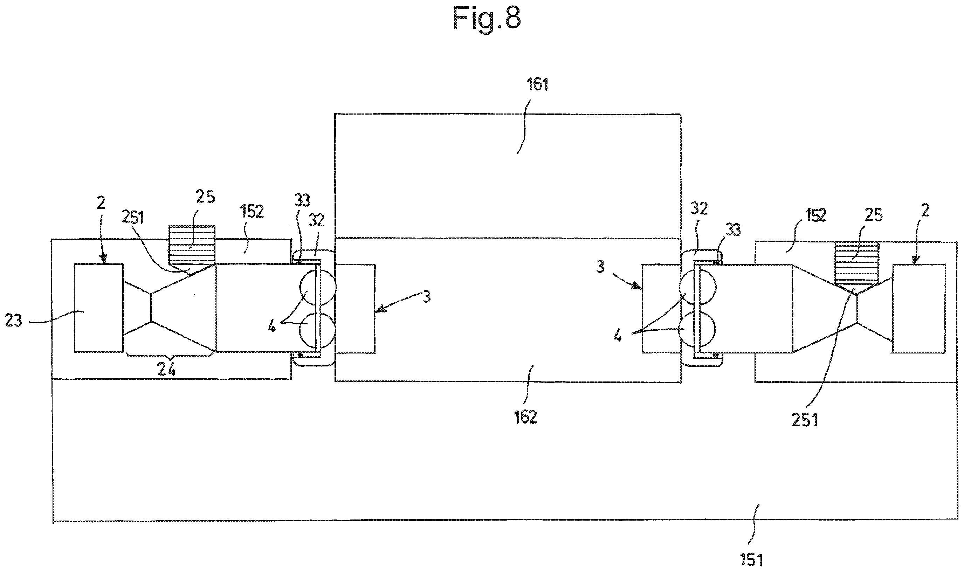

- figure 8 illustrates a longitudinal section of the hinge assembled according to the present invention.

With reference to the above figures, the present invention applies to a fire door mounted on a wall 12 within a frame 13 provided with jamb, in which a shutter 14 is provided. A hinge 11, for example the one above, is provided according to the present invention. The hinge comprises a frame side portion 15 and a shutter side portion 16, both obtained from thick sheet metal, for example of galvanized steel or another suitable metallic material.

The U-shaped frame side portion comprises a first fixing plate 151 extending, for example integrally, into a first pair of tubular pieces 152, provided at the ends of the fixing plate. Between the fixing plate and the tubular pieces, a first folded zone 153 is provided as a connecting square.

The shutter side portion, also shaped, comprises a second fixing plate 161 extending, for example integrally, into a second tubular piece 162. Between the fixing plate and the tubular piece, a second folded zone 163 is provided as a connecting square. The first pair of tubular pieces and the second tubular piece are aligned with each other when said hinge is assembled. The pair of tubular pieces (those integral with the door jamb) inside comprises a first elongated element 2 (such as a cylinder) while, on both the opposite ends of the second tubular piece (the one integral with the shutter), a second elongated element 3 is included, also substantially cylindrical. The first 2 and the second element 3 are couplable to each other and rotate with respect to each other around a same longitudinal axis Y by means of a rotation mechanism obtained on the respective ends of said elements, which comprises rolling elements 4 (such as spheres) interposed between annular races 21 on the first element 2 and 31 on the second element 3. Preferably, the rolling elements are made of metal or porcelain.

The second element 3 comprises a cup-shaped extension 32 dimensioned in such a way as to receive the cylindrical lower end 22 of the first element 2. In this way the rolling elements remain closed in a housing that is not visible, just as the elements are not visible, when the hinge is assembled. This coupling between the first and second elements improves the stability inside the cylindrical body and determines an anti-burglary system which, even by exerting major lateral forces, makes it difficult to offset the two longitudinal axes on the door and separate the door from the hinges.

Moreover, this housing determined by the cup-shaped extension becomes a cup for collecting lubricating grease and prevents access to the water, also thanks to the presence of an annular gasket 33 (or ring) arranged on the inner surface of the cup abutting against the outer surface of said lower end 22 of the first element 2. The hinge further comprises means for adjusting the position along said longitudinal axis Y, including a cylindrical shank 23 and an intermediate portion 24 having a double frusto-conical shape, provided on the first element 2, on the opposite end with respect to the end 22 inserted into the cup 32; a grain 25 which is inserted into a hole formed on the first pair of tubular elements 152 detects the inclined planes of said frusto-conical portions 241 and 242. When the grain is screwed into the hole it causes the displacement along the longitudinal axis Y of the first element 2. Advantageously, the tip 251 of said grain has a plurality of flat facets so as to promote the contact with said inclined planes.

According to a further characteristic of the present invention the rolling elements are three spheres placed at 120° with respect to each other, housed in a circular support 5 sized so as to be inserted into the annular races 21, 31. Moreover, said support has a central rod 51 inserting into a hole realized on the bottom of the second element 3, thus making the position of the support and of the spheres stable.

## Claims

1. Hinge for fire doors, said hinge being of the type which is mounted on a wall (12) within a frame (13) provided with jamb, in which a shutter (14) is provided, said hinge comprising:
• a frame side portion (15) and a shutter side portion (16),
• the frame side portion comprising a first fixing plate (151) extending into a first pair of tubular pieces (152), provided at the ends of the fixing plate,
• the shutter side portion comprising a second fixing plate (161) extending into a second tubular piece (162),
• the first pair of tubular pieces and the second tubular piece are aligned with respect to each other along a longitudinal axis (Y) when said hinge is assembled,
• the pair of tubular pieces inside comprises a first substantially cylindrical elongated element (2) and, on both the opposite ends of the second tubular piece, a second elongated element (3) is included, also substantially cylindrical, the first and the second element being couplable to each other and rotating with respect to each other around said longitudinal axis (Y) by means of a rotation mechanism obtained on the respective ends of said elements,
• said mechanism comprises rolling elements (4) interposed between annular races obtained one (21) on the first element (2) and one (31) on the second element (3) and comprises a cup-shaped extension (32) dimensioned in such a way as to receive the cylindrical lower end (22) of the first element (2) and the rolling elements (4),
**characterized in that** the rolling elements are three spheres placed at 120° with respect to each other, housed in a circular support (5) sized so as to be inserted into the annular races (21, 31) and said support has a central rod (51) inserting into a hole formed on the bottom of the second element (3), thus making the position of the support and of the spheres stable.

2. Hinge according to claim 1, wherein an annular gasket (33) is provided on the inner surface of the cup, said gasket (33) abutting against the outer surface of said lower end (22) of the first element (2).

3. Hinge according to claim 1, wherein the rolling elements are made of metal or porcelain.

4. Hinge according to claim 1, further comprising means for adjusting the position along said longitudinal axis (Y), said means including
• a cylindrical shank (23) and an intermediate portion (24) having a double frusto-conical shape, provided on the first element (2), on the opposite end with respect to the end (22) that is inserted into the cup (32),
• a grain (25) which is inserted into a hole formed on the first pair of tubular elements (152) that detects the inclined planes of said frusto-conical portions (241, 222).

5. Hinge according to claim 4, wherein the tip (251) of said grain has a plurality of flat facets so as to promote the contact with said inclined planes.

## Patentansprüche

1. Scharnier für Brandschutztüren, wobei das Scharnier von dem Typ ist, der an einer Wand (12) innerhalb eines Rahmens (13) montiert ist, der mit einem Türpfosten versehen ist, in dem ein Türflügel (14) vorgesehen ist, wobei das Scharnier umfasst:
• einem Rahmenseitenabschnitt (15) und einem Türflügelseitenabschnitt (16),
• der Rahmenseitenabschnitt eine erste Befestigungsplatte (151) umfasst, die sich in ein erstes Paar rohrförmiger Teile (152) erstreckt, die an den Enden der Befestigungsplatte vorgesehen sind,
• wobei der Türflügelseitenabschnitt eine zweite Befestigungsplatte (161) umfasst, die sich in ein zweites rohrförmiges Teil (162) erstreckt,
• wobei das erste Paar rohrförmiger Teile und das zweite rohrförmige Teil entlang einer Längsachse (Y) zueinander ausgerichtet sind, wenn der Scharnier montiert ist,
• wobei das Paar rohrförmiger Teile innen ein erstes, im Wesentlichen zylindrisches, längliches Element (2) umfasst und an den beiden gegenüberliegenden Enden des zweiten rohrförmigen Teils ein zweites längliches Element (3) enthalten ist, das ebenfalls im Wesentlichen zylindrisch ist, wobei das erste und das zweite Element miteinander gekoppelt werden können und sich mittels eines an den jeweiligen Enden der Elemente erhaltenen Drehmechanismus um die Längsachse (Y) zueinander drehen,
• wobei der Drehmechanismus Wälzelemente (4) umfasst, die zwischen ringförmigen Gleitschienen angeordnet sind, von denen eine (21) auf dem ersten Element (2) erhalten wird und eine (31) auf dem zweiten Element (3) erhalten wird, und eine becherförmige Erweiterung (32) umfasst, die so dimensioniert ist, dass sie das zylindrische untere Ende (22) des ersten Elements (2) und die Wälzelemente (4) aufnimmt,
**dadurch gekennzeichnet, dass** die Walzelemente drei in einem Winkel von 120° zueinander angeordnete Kugeln sind, die in einem kreisförmigen Träger (5) aufgenommen sind, der so bemessen ist, dass er in die ringförmigen Gleitschienen (21, 31) eingefügt wird, und wobei der Träger eine Mittelstange (51) aufweist, die sich in ein am Boden des zweiten Elements (3) ausgebildetes Loch einfügt, wodurch die Position des Trägers und der Kugeln stabilisiert wird.

2. Scharnier nach Anspruch 1, wobei eine ringförmige Dichtung (33) an der Innenfläche des Bechers vorgesehen ist, wobei die Dichtung (33) an der Außenfläche des unteren Endes (22) des ersten Elements (2) anliegt.

3. Scharnier nach Anspruch 1, wobei die Wälzelemente aus Metall oder Porzellan bestehen.

4. Scharnier nach Anspruch 1 ferner umfassend Mittel zur Einstellung der Position entlang der Längsachse (Y), wobei die Mittel Folgendes umfassen
• einen zylindrischen Schaft (23) und einen Zwischenabschnitt (24), der eine doppelkegelstumpfartige Gestalt aufweist, der auf dem ersten Element (2) an dem Ende vorgesehen ist, das dem Ende (22), das in den Becher (32) eingefügt wird, gegenüberliegt,
• ein Anschlagdübel (25), der in ein auf dem ersten Paar rohrförmiger Elemente (152) ausgebildetes Loch eingefügt wird, der die schrägen Ebenen der kegelstumpfartigen Abschnitte (241, 222) erfasst.

5. Scharnier nach Anspruch 4, wobei die Spitze (251) des Anschlagdübels eine Mehrzahl von flachen Flächen aufweist, um den Kontakt mit den schrägen Ebenen zu fördern.

## Revendications

1. Charnière pour portes coupe-feu, ladite charnière étant du type qui est montée sur un mur (12) au sein d'un cadre (13) muni d'un montant, dans lequel un volet (14) est ménagé, ladite charnière comprenant:
• une partie côté cadre (15) et une partie côté volet (16),
• la partie côté cadre comprenant une première plaque de fixation (151) s'étendant dans une première paire de pièces tubulaires (152), ménagée aux extrémités de la plaque de fixation,
• la partie côté volet comprenant une seconde plaque de fixation (161) s'étendant dans une seconde pièce tubulaire (162),
• la première paire de pièces tubulaires et la seconde pièce tubulaire sont alignées l'une par rapport à l'autre le long d'un axe longitudinal (Y) lorsque ladite charnière est assemblée,
• la paire de pièces tubulaires comprend à l'intérieur un premier élément allongé (2) sensiblement cylindrique et, sur les deux extrémités opposées de la seconde pièce tubulaire, un second élément allongé (3) est inclus, également sensiblement cylindrique, le premier et le second élément étant aptes à être couplés l'un à l'autre et étant en rotation l'un par rapport à l'autre autour dudit axe longitudinal (Y) au moyen d'un mécanisme de rotation obtenu sur les extrémités respectives desdits éléments,
• ledit mécanisme comprend des éléments de roulement (4) interposés entre des pistes annulaires obtenues l'une (21) sur le premier élément (2) et l'une (31) sur le second élément (3) et comprend une extension en forme de coupelle (32) dimensionnée de manière à recevoir l'extrémité inférieure cylindrique (22) du premier élément (2) et les éléments de roulement (4),
**caractérisée en ce que** les éléments de roulement sont trois sphères placées à 120° les unes par rapport aux autres, logées dans un support circulaire (5) dimensionné de façon à être inséré dans les pistes annulaires (21, 31) et ledit support possède une tige centrale (51) s'insérant dans un trou formé sur le bas du second élément (3), rendant ainsi la position du support et des sphères stable.

2. Charnière selon la revendication 1, dans laquelle un joint annulaire (33) est ménagé sur la surface interne de la coupelle, ledit joint (33) étant en butée contre la surface externe de ladite extrémité inférieure (22) du premier élément (2).

3. Charnière selon la revendication 1, dans laquelle les éléments de roulement sont constitués de métal ou de porcelaine.

4. Charnière selon la revendication 1, comprenant en outre des moyens d'ajustement de la position le long dudit axe longitudinal (Y), lesdits moyens incluant
• une jambe cylindrique (23) et une partie intermédiaire (24) ayant une forme tronconique double, ménagés sur le premier élément (2), sur l'extrémité opposée par rapport à l'extrémité (22) qui est insérée dans la coupelle (32),
• un grain (25) qui est inséré dans un trou formé sur la première paire d'éléments tubulaires (152) qui détecte les plans inclinés desdites parties tronconiques (241, 222).

5. Charnière selon la revendication 4, dans laquelle la pointe (251) dudit grain possède une pluralité de facettes plates de façon à favoriser le contact avec lesdits plans inclinés.
